(19) **Europäisches Patentamt / European Patent Office / Office européen des brevets**

(11) **EP 2 533 479 B1**

(12) **EUROPEAN PATENT SPECIFICATION**

(45) Date of publication and mention
of the grant of the patent:
**23.10.2013 Bulletin 2013/43**

(51) Int Cl.:
**H04L 12/70** *(2013.01)*

(21) Application number: **12006244.3**

(22) Date of filing: **30.12.2003**

(54) **Techniques for guaranteeing bandwidth with aggregate traffic**

Techniken zur Gewährleistung von Bandbreite mit aggregiertem Verkehr

Techniques permettant de garantir la largeur de bande avec un trafic d'agrégat

(84) Designated Contracting States:
**AT BE BG CH CY CZ DE DK EE ES FI FR GB GR HU IE IT LI LU MC NL PT RO SE SI SK TR**

(43) Date of publication of application:
**12.12.2012 Bulletin 2012/50**

(62) Document number(s) of the earlier application(s) in accordance with Art. 76 EPC:
**11002407.2 / 2 341 673**
**03788750.2 / 1 700 420**

(73) Proprietor: **Intel Corporation**
**Santa Clara, CA 95052 (US)**

(72) Inventor: **You, Hua**
**Shanghai**
**Shanghai 200336 (CN)**

(74) Representative: **Beresford, Keith Denis Lewis**
**Beresford & Co.**
**16 High Holborn**
**London**
**WC1V 6BX (GB)**

(56) References cited:
**EP-A- 1 202 501    EP-A- 1 300 995**
**WO-A-98/26612      US-A- 5 347 511**
**US-A- 5 359 593     US-A- 5 982 748**
**US-B1- 6 477 582**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

Embodiments of the present invention relate generally to computer networks, and more particularly to bandwidth management for network traffic.

Background Information

Quality of Service (QoS) is the concept that transmission rates, error rates, and other network transmission characteristics can be measured, improved, and to some extent guaranteed in advance of a network transmission. QoS is a significant concern for high bandwidth networks that regularly transmit large amounts of data such as video, audio, multimedia, and the like. Moreover, QoS is problematic for geographically dispersed networks, such as the Internet, where any single network transaction can span multiple sub-networks through multiple Internet Service Providers (ISPs).

Attempts to provide decent QoS architectures often suffer from scalability issues. That is, independent sub-networks (e.g., ISPs) are required to be too heavily dependent upon one another to produce any viable commercial solution. As soon as independent sub-networks become dependent upon the operational specifics of other sub-networks, they become less scalable and less desirable. When scalability is adequately achieved, the result is usually achieved with overly complex implementation schemes that dramatically decrease network throughput at the expense of providing scalability.

Accordingly a more scalable QoS technique for large geographically disperse networks is needed, where scalability is achieved in a manner that does not significantly impact network throughput and is not overly complex.

United States Patent Number 5,982,748 entitled "Method and apparatus for controlling admission of connection requests" by Yin, Nanying et. al. describes a system that controls the admission of a connection request based on available resources. The received connection request specifies a particular class of service. The system then determines the allocated bandwidth for the specified class of service. Available resources for the specified class of service are determined based on measured traffic flow and the allocated bandwidth associated with the specified class of service. The connection request is accepted if the available resources are capable of supporting the requested connection. An allocation factor may be used by the system to allocate bandwidth. The allocation factor can be updated based on changes in measured traffic flow. Additionally, subscribed traffic parameters may be used to determine available resources for the specified class of service.

United States Patent Number 5,347,511 entitled "Traffic management in packet communications networks" by Gun, Levent describes a packet communications network, wherein the addition or deletion of a connection to the network by a user is governed by a link traffic metric which represents the effective capacity of each link in the network which participates in the packet connection route. A new connection (or deletion) is represented by a compatible metric which allows updates in the link metric by simple vector addition or subtraction. Separate link metrics for a plurality of classes of service permit a much higher efficiency in the exploitation of the link bandwidth than is possible with a single link metric. A packet network using multiple link metrics and efficient metric updating techniques provides increased packet throughput while, at the same time, preserving all class of service guarantees.

United States Patent Number 5,359,593 entitled "Dynamic bandwidth estimation and adaptation for packet communications networks" by Derby, Jeffrey II. et. al. describes access control for a packet communications network which includes a dynamic bandwidth updating mechanism which continuously monitors the mean bit rate of the signal source and the loss probability of the connection. These values are filtered to remove noise and then used to test whether the values fall within a predefined acceptable adaptation region in the mean bit rate, loss probability plane. Values falling outside of this region trigger bandwidth updating procedures which, in turn, result in acquiring a new connection bandwidth, and determining new filter parameters and new parameters for a leaky bucket access mechanism.

International PCT application number PCT/US97/22776 with international publication number WO98/26612 entitled "Dynamic control processes and systems for asynchronous transfer mode networks" by Graham, Gregory et. al. describes a system that comprises a system control module and a plurality of interconnected asynchronous transfer mode switches, wherein the interconnected asynchronous transfers mode switches are interconnected with one another via at least one physical interface to form a network. The network is used to transfer various types of information. Each asynchronous transfer mode switch has a connection admission control module to determine whether a virtual connection, such as a virtual path, virtual channel, or grouping of virtual paths, can be connected through that particular asynchronous transfer mode switch. The virtual connection is Formed from one synchronous transfer mode switch to at least one other asynchronous transfer mode switch via a link of the at least one physical interface.; The system control module connects to at least one asynchronous transfer mode switch and determines whether the virtual connection can be created in the network. A process of monitoring a utilization level of a grouping of a virtual path on a physical interface comprises checking the utilization level of the virtual path, updating an amount of available bandwidth for the virtual path, and comparing the amount of available bandwidth with a maximum threshold for the available bandwidth and setting an overload condition if the amount exceeds the maximum threshold and clearing the overload condition if the amount is below the maximum threshold. Service contracts governing a client's use of the network and ability to set up a virtual connection are also checked in certain circumstances.

European Patent Application Publication No. EP 1 300 995 A2 entitled "Resource management in heterogeneous QOS based packet networks" by Rabic, Sameh A. et, al. relates generally to data communication networks and more particularly to a method of bandwidth management in a multiservice connection-oriented network which uses one or more overbooking factors and one or more overbooking models. The method allows an edge node which has received a connection request to accurately determine the bandwidth available on a given link in the network, by ensuring that different overbooking models and different overbooking factors arc normalized at the edge node. The method of the present invention comprises: receiving at a selected one of the edge nodes updates from each of the core nodes detailing a bandwidth management model, one or more overbooking factors and the available link capacity associated with each of the core nodes; receiving at the selected one of the edge nodes a connection request; determining at the selected one of the edge nodes a preferred route through the network by accounting for a variation in overbooking factors or bandwidth management models between the selected one of said the nodes and each of the core nodes.

United States Patent No. US 6,477,582 B1 entitled "Method and apparatus for conservative link selection" by Luo, Gang et. al. describes a method for path selection in communications networks with multiple QoS metrics. This method takes an additive metric (say, cost) as a path minimization target and a concave metric (say, bandwidth) as a minimum requirement for each link. A potential objective is to find a path between a source node and a destination node in a communications network such that the bandwidth of each link in the path exceeds a bandwidth requirement and the cost of the path is minimized. The method eliminates from consideration those links whose available bandwidth does not exceed a required bandwidth. The method then reassigns the cost of those links whose available bandwidth docs not exceed a function of the required bandwidth. A path from the source node to the destination node is then selected, using only links still under consideration, corresponding to a path wherein cost is minimized.

European Patent Application Publication No. EP 1 202 501 A2 entitled "Hierarchical bandwidth management in multiservice networks" by Rabie, Samch A. describes a hierarchical bandwidth management model for multiservice networks that provide management at a transport level and at a service/application level to provide increased network scalability without sacrificing bandwidth management efficiency and flexibility. In particular, in an Multiprotocol Label Switching (MPLS) environment, a method of hierarchical bandwidth management in a multiservice network supporting various quality of service levels (e.g. EF, AF1, AF2, BE) and a number of applications (e.g. ATM, MPLS, IP, FR) is disclosed. The method includes the steps of: establishing a transport connection tunnel (e.g. an E-Label Switched Path (LSP)) between pairs of the edge nodes in the network; and managing bandwidth of the transport connection tunnel among the quality of service levels and the applications.; In an exemplary embodiment the invention also provides a hierarchical admission structure: one at a transport level for the label switched paths and one at a service level for user/application connections. The hierarchical bandwidth management model (exemplified in a method and an apparatus) provides the ability to share and/or partition bandwidth by application and quality of service and the ability of customer-controlled trade-off of bandwidth guarantee (per application/QoS) and network efficiency (i.e. low fragmentation).

Brief Description of the Drawings

FIG. 1 is diagram of a network to guarantee service in accordance with one embodiment of the invention.

FIG. 2 is a flow diagram of a method to guarantee network service in accordance with one embodiment of the invention.

FIG. 3 is a flow diagram of a method to manage bandwidth of a guaranteed network service request in accordance with one embodiment of the invention.

FIG. 4 is a diagram of a bandwidth management system in accordance with one embodiment of the invention.

Description of the Embodiments

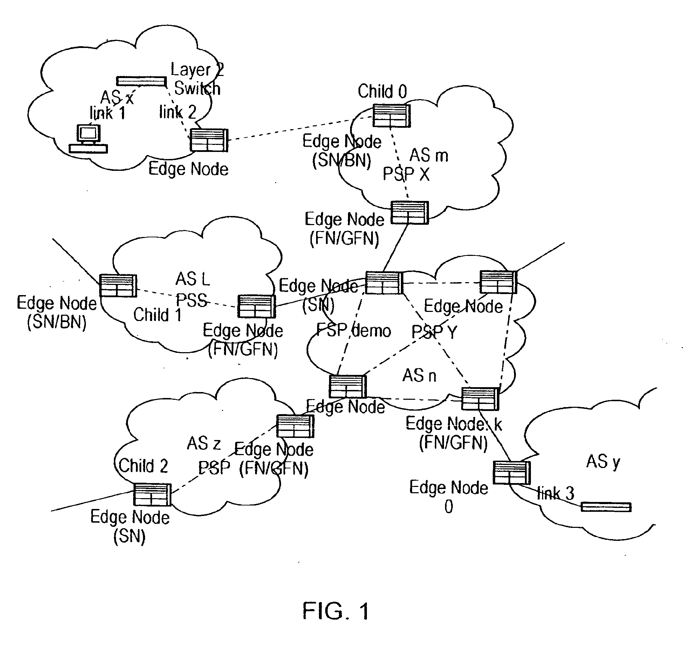

FIG. 1 is a diagram of a network 100 that guarantees service for network transactions before the transactions are processed within the network 100. The technique is implemented in a computer-accessible medium within processing devices of a network. These devices can be routers, hubs, bridges, switches, gateways, firewalls, proxies, servers, client workstations, and the like. The network 100 is logically represented in the computer-accessible medium as a tree where each branch of the tree is a node. A node is a processing device that participates in a network transaction by routing data packets associated with the network transaction between originating nodes and destination nodes.

The embodiments of this invention provide improved techniques for guaranteeing service betweens node of a network 100. Guaranteeing means that bandwidth availability is assured before a network transaction commences, assuming that the nodes and links of the network 100 remain operational and do not otherwise fail. One of ordinary skill in the art readily appreciates that an absolute assurance that a network transaction will complete within a network 100 is not feasible, since links and nodes can fail abnormally due to hardware or software failures, or links and nodes can fail due to planned maintenance activity.

The network 100 depicted in FIG. 1 includes a variety of Autonomous Systems (AS) that can operate independently of one another. These ASs can be viewed as independent sub-networks, such as ISPs, private networks and the like. The sub-networks can geographically span the entire world. Within each AS, a number of processing nodes are used to directly communicate with other external ASs; these nodes are referred to as edge nodes.

The entire network 100 is logically organized as a tree. In FIG. 1, that tree is inverted, such that the root of the tree is identified by AS Y and the farthest leaf is identified by AS X. The root node of the tree is edge node D. AS N is a father of children 0, 1, and 2. Moreover, the children are considered brothers to each other. Each AS can itself be considered a sub-tree, having its own internal root node, father node, and brother nodes. Moreover, the children of a father are considered its sons. Thus, father AS N has sons identified as Child 0, Child 1, and Child 2. Moreover, AS N is considered a grandfather of AS.X.

A network transaction is a communication between any two or more nodes of the network 100. A node that originates the network transaction is called an originating node. A network transaction transfers data packets from an originating node to a destination node. Thus, the node that the originating node desires to communicate with via a network transaction is referred to as a destination node. A network transaction will include the transfer of one or more network data packets from the originating node through one or more intermediate nodes to the destination node. Thus, the network transaction is associated with a path through the network from the originating node to the destination node. A variety of path generating and dynamic modifying algorithms are well known in the networking arts and readily achievable using existing network architectures and protocols. All such algorithms and architectures are capable of being used with the embodiments of this invention.

The volume of and rate at which network packets are present and sent between any two nodes of the network 100, is referred to as the bandwidth. These data transfers occur over the links of the network 100, the links connect the nodes. Each link can be capable of handling different types of media, different volumes, different rates, and a different number of concurrent sessions of network transactions. The hard and soft limitations of each link are known in advance by each node based on its hardware and software configurations. These limitations can be communicated between nodes using well known and existing networking protocols and technologies.

When an originating node requests a particular network transaction directed to a destination node, the originating node would like to know in advance of commencing the transaction that a sufficient amount of bandwidth will exist within the network 100 in order to process the transaction to the destination node. In embodiments of the present invention, this is achieved with a Bandwidth Conservation Criterion (BCC) calculation. The originating node makes a request for a network transaction to the first processing node defined in the network path. The first processing node identifies the total available bandwidth of the destination node and sums the bandwidth of all outstanding traffic that is destined for the destination node. This calculation is the BCC calculation that guarantees the originating node that bandwidth will exist to satisfy the transaction. IN response to the guarantee, the originating node commences the network transaction through the network 100.

As an example, consider an originating node A that requests a network transaction requiring 10 KB of bandwidth. The transaction is directed to destination node N and is initially requested of initial processing node B. N can have a maximum bandwidth of 128 KB. When A makes the request to B, the current aggregate traffic directed to N is 110 KB.

In the present example, B applies BCC to determine that if the network transaction is guaranteed there will be 120 KB of current traffic directed towards N, which is less than the maximum bandwidth of 128 KB that N can handle at any point in time. Thus, B makes the BCC calculation when it receives the request from A and determines that the network transaction can be guaranteed. The guarantee is then communicated from B to A, and the network transaction commences.

BCC can be defined with the following equations, where the originating node is the node identified in AS X and the destination node is edge node D of AS Y (the root of the tree):

$$
\begin{cases}
\displaystyle\sum_i r_{ij}^D \le r_{jk}^D \\[2mm]
B_{ij}^X = \displaystyle\sum_y r_{ij}^y
\end{cases}
$$

$B_{ij}^X$ is the overall bandwidth of AS X available between edge nodes i and j and $r_{ij}^D$, the corresponding portion of AS X in the tree rooted by edge node D. Thus, if the bandwidth request associated with a network transaction when combined with the total aggregate bandwidth destined for edge node D is less than the total bandwidth that edge node D can handle, the BCC equation holds true and a network transaction can be guaranteed service.

This calculation is a scalable approach, because all that is needed is a calculation that sums existing aggregate traffic that is being directed to a destination node along with the known bandwidth limit associated with the destination node. By aggregate traffic it is meant that all current network traffic that is active in the network and is currently being directed to the destination node. However, at any given point as the network transaction is progressing through the network 100, one or more nodes may not have sufficient bandwidth to handle the network request. Thus, BCC can be augmented to make necessary dynamic adjustments as needed at each processing node associated with a network path of a network transaction, which is guaranteed by the BCC equation.

For example, a network transaction may progress after a guarantee of service from AS m to edge node j' of AS Y. At this point in time, however, the current bandwidth for the link between node j' and k (link j'-k) may be at capacity and not capable of handling the network transaction. Without the ability for link j'-k to increase its bandwidth the transaction may fail or become unreasonably delayed. Thus, the static approach of BCC can be augmented with a Closest relation AllocatioN (CLAN) technique, that permits nodes to borrow bandwidth from adjacent (brother, son, father) nodes.

With the CLAN technique, each node of the network 100 monitors the traffic volume occurring with its link to its adjacent nodes, more specifically with its father node. When a particular node notices a reduction in bandwidth occurring with its link to its father node, that reduction is known to the father node (adjacent node). This reserved bandwidth is held by the father node and delivered to other more needing sons of the father when needed.

Thus, in the example, presented above, if the link j'- k can hold 128 KB volume and is at capacity when a network transaction comes along that needs to reach node k, then node k can borrow 64 KB from one or both of its two remaining sons. Node k knows the 64 KB is obtainable from one or its two remaining sons, because if finds the two remaining sons having chunks of available bandwidth to their father node K during processing and request bandwidth from their father node when needed.

For example, consider that the three links to node k each have a total bandwidth capacity of 128 KB and consider further that each son node is configured to manage only 64 KB of capacity at any one time and configured to release and to notify the father node k whenever bandwidth is needed above 64 KB and the father node will be aware when capacity above 64 KB is no longer needed for any given transaction. The father node k then manages this excess bandwidth and when a network transaction moving from link j'-k, in our present example, needs additional bandwidth; the father node k has it in reserve to deliver to the son node j', because the bandwidth has been previously borrowed from one or both brothers of node j'.

Borrowing can occur between any two adjacent nodes or brother nodes. Moreover, the borrowing need not occur within a single AS. For example edge node j'connects two different ASs (L and M) to AS N. Thus, edge node j of AS M can borrow from the appropriate edge node of AS L in order to complete a transaction over link j-j'. This occurs through j', which acts as an adjacent node or father node to both node j and the edge node of AS L that directly connects to node j'.

Thus, with CLAN, adjacent nodes establish policies with one another such that chunks of bandwidth are managed by father nodes on behalf of their sons. These chunks of bandwidth are considered reserves, which must be requested before the reserves can be used from the appropriate father node. Thus, son nodes borrow, via their father, bandwidth that exceeds a pre- negotiated amount; the bandwidth borrowed comes from the brother nodes of a borrowing son node, but is managed by their father node. In a similar fashion father node can borrow from its father within the network 100, such that at any one time a borrowing node may be getting bandwidth from its brothers and from brothers of its father.

Hierarchical relationships between nodes of a network are managed in order to borrow bandwidth with the CLAN technique; the borrowing is needed for a network transaction that is progressing through nodes of a network. That is, a node in need of more bandwidth uses its closest relationship to adjacent nodes to acquire the necessary bandwidth allocation and this borrowing can progress upward through that node's relatives after first borrowing from its closest relation.

Further, the BCC calculation permits a transaction guarantee to be given to an originating node of a network transaction where that network transaction requires a certain amount of bandwidth through a network 100 in order to reach a destination node. Moreover, as the network transaction progresses through the network 100, if any particular link between nodes lacks sufficient bandwidth to process the transaction, the bandwidth can be temporarily borrowed from adjacent nodes using the CLAN technique. The BCC and CLAN techniques provide a scalable solution to QoS for ASs or independent networks. These techniques are not overly complex and can be implemented within existing network protocols and software designed to calculate the BCC and implement the CLAN technique.

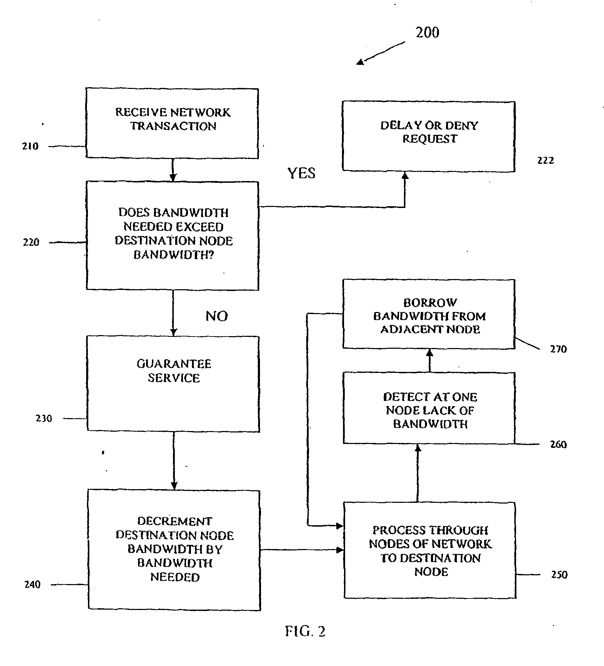

FIG. 2 is a flow diagram of one method 200 to guarantee network service by implementing the BCC and CLAN techniques discussed above with FIG. 1. The method 200 is implemented in a computer accessible medium and processes on each node of a network. The nodes are processing devices in the network which originate, route, and process network transactions through a network. The method 200 can be implemented within each node of the network as software, firmware, and/or via network protocols.

Initially, at 210, a request for a network transaction is received by a first processing node. The request originates from an originating node. The network transaction is associated with a network path which defines one or more routes for network packets associated with the network transaction to traverse through one or more intermediate nodes of the network to a destination node. The first processing node is the first node of that network path.

When the first processing node receives the network request from the originating node, it determines whether the request is acceptable based on the BCC calculation by checking if the aggregate traffic existing in the network which is destined for the destination node plus the bandwidth needed by the network transaction exceeds the destination node's maximum bandwidth. The BCC calculation and the appropriate check are made at 220. If the aggregate traffic plus the bandwidth needed does exceed the destination node's bandwidth limit, then, at 222, the network transaction cannot be guaranteed and the originating node is notified of the same.

However, if at 220, the aggregate traffic plus the bandwidth needed does not exceed the destination node's bandwidth limit, then, at 230, the first processing node guarantees to the originating node that the requested network transaction will have sufficient bandwidth to reach the destination node within the network. In one embodiment, as soon as this guarantee occurs, the total available bandwidth at the destination node is decremented at 240 by the bandwidth which is needed to satisfy the current network transaction.

Of course there are a variety of ways to implement the BCC calculation. One technique would be to have the destination node keep track of traffic headed its way and maintain a current available bandwidth counter, which is constantly and dynamically changing. Another way is to have each node dynamically make queries to other nodes in the network to dynamically calculate the BCC. One skilled in the art will readily appreciate that other techniques can also exist. All such techniques, which resolve the BCC calculation, are intended to be included in the embodiments of this invention.

Once the first processing node guarantees service, the network transaction commences to process through the network to the destination node at 250. In some embodiments, at some point, during the processing of the network transaction, a particular processing node may determine that it actually lacks the necessary bandwidth needed to process the network transaction through a link to a next node of the network path associated with the network transaction, as depicted at 260. Each node of the network dynamically implements the CLAN technique discussed above with FIG. 1 in order to dynamically resolve this problem.

Accordingly, at 270, the particular processing node that lacks sufficient bandwidth borrows the needed bandwidth from an adjacent node in order to process the network transaction. Thus, the father node of the particular processing node manages reserve bandwidth on behalf of the particular processing node and the particular processing node's brother nodes. These nodes pre- establish with one another the amount of excess bandwidth that the father node will be responsible for managing and delivering, if and when excess bandwidth is needed by any of the sons of the father. Additionally, in some embodiments, the father node of a needy son may not have sufficient bandwidth to satisfy a needing son's bandwidth request. In these situations, the father contacts his father (adjacent node to the father and grandfather of the needing son) in order to borrow bandwidth from brothers of the father (grandfather to the needing son). This borrowing continues as needed according to the rules associated with the CLAN technique, as described above in FIG. 1.

The embodiments of method 200 demonstrate how the BCC and CLAN technique can be implemented and processed within nodes of a network in order to provide a scalable QoS from heterogeneous ASs logically organized as a single network. These embodiments are not complex and can be deployed with software processing on each network node that uses conventional network protocols to communicate between nodes.

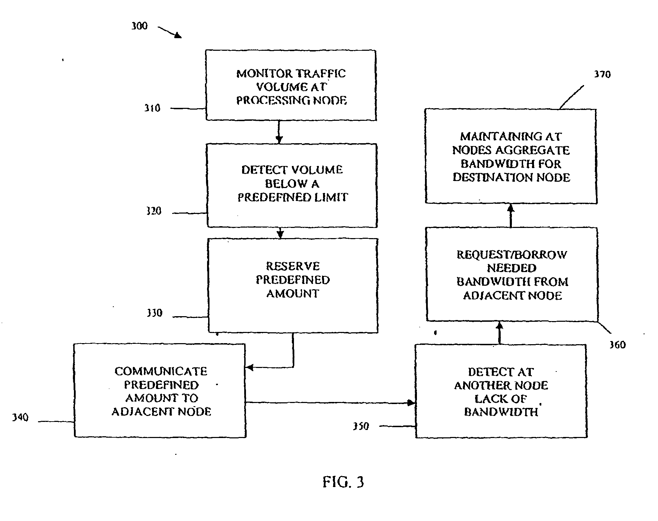

FIG. 3 is a flow diagram of one method 300 to manage bandwidth of a guaranteed network service request. The method 300 is implemented within each node of a network and is implemented in a computer accessible medium. The method 300 represents processing performed by each node and some interactions occurring between nodes during a network transaction. The method 300 represents embodiments of the CLAN technique, where nodes borrow and manage bandwidth within a network during a network transaction.

At 310, a processing node associated with processing a network transaction through a network to a destination node monitors its own traffic volume. The processing node has previously used policies known to its adjacent nodes (brothers, father, and sons) in order to configure it to monitor traffic at specific predefined levels. When traffic falls below the predefined limit, then this is detected at 320, and predefined amounts of bandwidth that are available are reserved as being unavailable to the processing node at 330.

Those predefined amounts of reserved bandwidth are known to the processing node's father node (adjacent node) at 340. The father node manages a pool of reserved bandwidth on behalf of the processing node and on behalf of brothers of the processing node. Thus, at 350, when another node (brother node of the original processing node) is processing its own network transaction and determines that it needs additional bandwidth to process the network transaction through to the father node, the brother node makes a request at 360 to borrow the needed bandwidth from the father node (adjacent node). The brother has directly borrowed the bandwidth from the father, but indirectly borrowed it from the excess capacity that the brother's siblings had previously deposited with the father for purposes of management.

This bandwidth management and borrowing technique reflects an example implementation of the CLAN technique discussed above with FIGS. 1 and 2. Policies about management associated with bandwidth deposits (e.g., reservations) and withdrawals are communicated between adjacent nodes of the network. Moreover, at 370, each node of the network is capable of resolving the BCC calculation when needed by maintaining techniques for resolving (e.g., calculating) the aggregate bandwidth associated with any particular destination node of a particular network transaction.

Method 300 provides an example implementation of the CLAN technique and maintains the capabilities when needed to perform the BCC calculation. This demonstrates how a heterogeneous network consisting of a plurality of nodes can interact in a scalable fashion with one another to provide QoS for a network transaction.

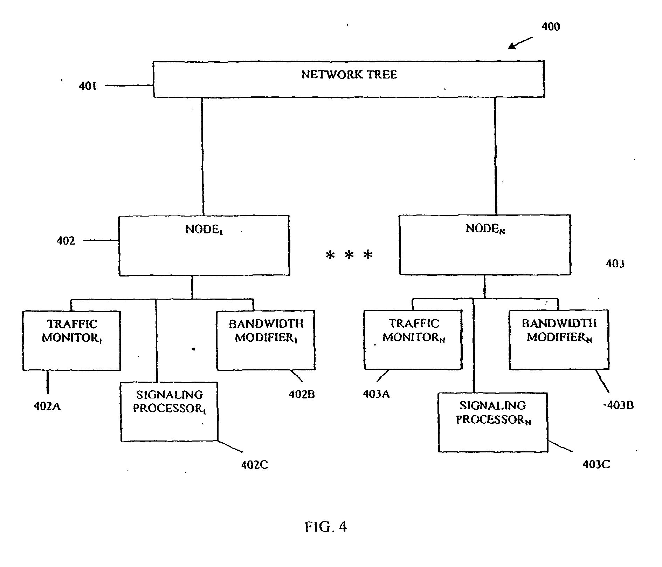

FIG. 4 is a diagram of one bandwidth management system 400. The bandwidth management system 400 represent an embodiment of the BCC and CLAN technique within a heterogeneous network, where the network includes a plurality of sub-networks identified as ASs. The bandwidth management system 400 is implemented in a computer accessible medium.

The bandwidth management system 400 includes logically representing the heterogeneous network as a network tree 401, wherein branches of the tree 401 can include other sub-trees. The tree 401 can be entirely managed and manipulated by pointers and metadata associated with the attributes and characteristics of the tree 401. The tree 401 includes a plurality of nodes 402 and 403. Each node 402 or 403 assumes a designation as a son, father, and/or brother depending upon its context within the tree to another adjacent node 402 or 403. Thus, a single node 402 or 403 can have multiple designations with respect to adjacent nodes 402 and 403. A node can also have a designation with respect to non-adjacent nodes, such as grandfather, grandson, uncle, and the like.

Each node 402 or 403 also includes its own traffic monitor 402A-403A, bandwidth modifier 402B-403B, and signaling processor 402C-403C. These entities combine both software logic and existing networking protocols to perform the BCC and CLAN techniques.

Thus, the traffic monitor 402A- 403A monitors traffic on its respective node 402 or 403 and communicates traffic information to the traffic monitors 402A- 403A of its adjacent nodes 402 or 403. This communication and monitoring is useful in resolving the processing associated with the BCC and CLAN techniques. For example, traffic volumes can be aggregated to resolve the BCC calculation for a particular destination node of a particular network transaction. Moreover, the traffic volumes can be used to determine whether to deposit bandwidth with or to withdraw on loan bandwidth from an adjacent node 402 or 403.

The bandwidth modifier 402B-403B communicates with the traffic monitor 402A-403A in order to adjust bandwidth associated with its particular processing node 402 or 403. That is, when the traffic monitor 402A-403A reports bandwidth below a predefined and pre-negotiated amount, the bandwidth modifier 402B-403B can be used to implement the CLAN technique and claim additional bandwidth not being used as reserved bandwidth, which is then deposited with an adjacent node 402 or 403. Conversely, when a node 402 or 403 needs additional bandwidth, the bandwidth modifier 402B-403B can be used to detect this need based on a current transaction and based on reports of bandwidth usage from the traffic monitor 402A-403A in order to request more bandwidth on loan from an adjacent node 402 or 403.

The signaling processor 402C-403C can be used to actually allocate and reallocate need bandwidth or excess bandwidth from an adjacent node 402 or 403. That is, the actual device that permits bandwidth to be redirected to a specified link can be controlled with the signaling processor 402C-403C. In essence, bandwidth is reallocated and throttled up or throttled down over physical links when bandwidth is deposited or withdrawn from an adjacent node 402 or 403. This throttling is the responsibility of the signaling processor 402C-403C.

During operation, the traffic monitor 402A-403A reports traffic on its node 402 or 403 to the adjacent nodes 402 or 403. The bandwidth modifier 402B-403B uses this in combination with existing network requests to modify bandwidth. The signaling processor 402C-403C detects modified bandwidth and drives the underlying bandwidth device to throttle up and down affected links of the nodes 402 and 403.

The use of the traffic monitor 402A-403A, the bandwidth modifier 402B-403B, and the signaling processor 402C-403C provides a modular event-driven implementation of the BCC and CLAN technique that is scalable across a large heterogeneous network. However, one of ordinary skill in the art appreciates that other implementations and architectures are possible where the functions of the modules are further isolated into more modules or combined into less modules. All such modifications to this architecture that are designed to perform the BCC or CLAN techniques fall within the scope of the embodiments for this invention.

The above description is illustrative, and not restrictive. Many other embodiments will be apparent to those of skill in the art upon reviewing the above description. The scope of embodiments of the invention should therefore be determined with reference to the appended claims, along with the full scope of equivalents to which such claims are entitled.

**Claims**

1. A method (300) for managing bandwidth, comprising:

    monitoring (310) traffic volume at a processing node of a network;
    wherein the method is **characterised by**:

        detecting (320) that the volume has fallen below a predefined limit by a predefined amount;
reserving (330) the predefined amount; and
communicating (340) the reserved predefined amount to an adjacent node.

2. The method of claim 1 further comprising:

detecting (350) a network transaction request that exceeds an available handwidth at a different processing node; and
requesting (360) a needed bandwidth amount to service the network transaction from the reserved predefined amount held by the adjacent node.

3. The method of claim1 further comprising adding the reserved predefined amount to an available bandwidth at the adjacent node.

4. The method of claim 3 further comprising decrementing, at the adjacent node, a requested bandwidth amount from the available bandwidth after receiving a needed bandwidth request from a different processing node.

5. The method of claim 4 further comprising borrowing (360), at the adjacent node, from an adjacent node that is adjacent to the adjacent node, a least a portion of the requested bandwidth amount if the requested bandwidth amount exceeds the available bandwidth.

6. The method of claim 1 further comprising maintaining by the processing node a list of nodes connected directly to the processing node which includes the adjacent node.

7. The method of claim 1 further comprising maintaining (370) by the processing node an aggregate total bandwidth available at a destination node.

8. The method of claim 1 further comprising, monitoring by the adjacent node network traffic volume occurring with its links to its other adjacent nodes.

9. An apparatus (400) for use in a network, said apparatus comprising:

a network node (402, 403) to process a network transaction,
**characterised in that** the network node comprises:

a traffic monitor (402A, 403A) to monitor network traffic and to communicate that network traffic to an adjacent node;
a bandwidth modifier ($402_B$, $403_B$) to adjust bandwidth allocation based on communication with the traffic monitor; and

a signalling processor ($402_C$, $403_C$) to allocate available bandwidth based on communication with the traffic monitor ($402_A$, $403_A$) and the bandwidth modifier ($402_B$, $403_B$) ;
wherein the node is configured to:

use its traffic monitor ($402_A$, $403_A$), bandwidth modifier ($402_B$, $403_B$), and signalling processor ($402_C$, $403_C$) to reserve a predefined amount of handwidth if it becomes available in advance of any request for that predefined amount and communicate that reservation to the adjacent node;
maintain links to the adjacent node and other nodes, and wherein:

the links represent the node's location within a tree that logically represents a network; and
the links define a designation or relationship for the node with respect to the adjacent node and the other nodes of the tree.

10. The apparatus of claim 9, wherein the adjacent node is configured to establish policies with other adjacent nodes such that chunks of bandwidth arc managed by father nodes on behalf of their sons' nodes.

11. The apparatus of claim 10, wherein the chunks of bandwidth are considered reserves, which are requested before the reserves are used from an appropriate lather node.

12. The apparatus of claim 9, further configured so that hierarchical relationships between nodes of a network are managed in order to borrow bandwidth.

13. The apparatus of claim 9, wherein the predefined amount of bandwidth can be temporarily borrowed from the adjacent node using a closest relation allocation technique.

14. The apparatus of claim 9, further configured so that borrowing between the nodes of the network for bandwidth occurs using a closest relation technique.

15. A computer program which when executing on a computer or computer network performs all the method steps of any one of claims 1 to 8.

**Patentansprüche**

1. Verfahren (300) zur Bandbreitenverwaltung, wobei das Verkehrsvolumen an einem Verarbeitungsknoten eines Netzwerks überwacht wird (310),

**dadurch gekennzeichnet ist, dass**
erfasst wird (320), dass das Volumen um einen vordefinierten Betrag unter einen vordefinierten Grenzwert gefallen ist,
der vordefinierte Betrag reserviert wird (330) und der reservierte vordefinierte Betrag einem benachbarten Knoten mitgeteilt wird (340) .

2. Verfahren nach Anspruch 1, wobei ferner eine Netzwerkstransaktionsanforderung erfasst wird (350), die eine verfügbare Bandbreite an einem anderen Verarbeitungsknoten überschreitet, und der benötigte Bandbreitenbetrag angefordert wird (360), um die Netzwerkstransaktion von dem in dem benachbarten Knoten gehaltenen reservierten vordefinierten Betrag zu bedienen.

3. Verfahren nach Anspruch 1, wobei ferner der reservierte vordefinierte Betrag zu der verfügbaren Bandbreite an dem benachbarten Knoten hinzuaddiert wird.

4. Verfahren nach Anspruch 3, wobei ferner an dem benachbarten Knoten nach Empfang eines benötigten Bandbreitenbetrags von einem anderen Verarbeitungsknoten ein angeforderter Bandbreitenbetrag von der verfügbaren Bandbreite dekrementiert wird.

5. Verfahren nach Anspruch 4, wobei ferner an dem benachbarten Knoten mindestens ein Teil des angeforderten Bandbreitenbetrags von einem Knoten, der dem benachbarten Knoten benachbart ist, ausgeliehen wird (360), wenn der angeforderte Bandbreitenbetrag die verfügbare Bandbreite überschreitet.

6. Verfahren nach Anspruch 1, wobei ferner von dem Verarbeitungsknoten eine Liste von Knoten gehalten wird, die direkt mit dem Knoten verbunden sind, zu denen der benachbarten Knoten gehört.

7. Verfahren nach Anspruch 1, wobei ferner von dem Verarbeitungsknoten eine an einem Zielknoten verfügbare aggregierte Gesamtbandbreite gehalten wird (370).

8. Verfahren nach Anspruch 1, wobei ferner wobei von dem benachbarten Knoten das Netzwerksverkehrsvolumen überwacht wird, das mit seinen Links zu seinen weiteren benachbarten Knoten stattfindet.

9. Vorrichtung (400) zur Verwendung in einem Netzwerk, wobei die Vorrichtung einen Netzwerksknoten (402, 403) zur Verarbeitung einer Netzwerkstransaktion aufweist,
**dadurch gekennzeichnet, dass** der Netzwerksknoten aufweist:

einen Verkehrsmonitor ($402_A$, $403_A$) zur Überwachung des Netzwerksverkehrs und zu dessen Übermittlung an einen benachbarten Knoten,
einen Bandbreitenwandler ($402_a$) $403_a$) zum Einstellen der Bandbreitenzuordnung aufgrund einer Kommunikation mit dem Verkehrsmonitor und
einen Signalprozessor ($402_C$, $403_C$) zum Zuordnen verfügbarer Bandbreite aufgrund einer Kommunikation mit dem Verkehrsmonitor ($402_A$, $403_A$) und dem Bandbreitenwandler ($402_a$, $403_a$), wobei der Knoten so konfiguriert ist, dass er
seinen Verkehrsmonitor ($402_A$, $403_A$), Bandbreitenwandler ($402_a$, $403_a$) und Signalprozessor ($402_C$, $403_C$) zur Reservierung eines vordefinierten Bandbreitenbetrags benutzt, wenn er verfügbar wird, und zwar vor jeder Anforderung dieses vordefinierten Betrags, und die Reservierung dem benachbarten Knoten übermittelt, Links zu dem benachbarten und weiteren Knoten aufrecht erhält, und wobei
die Links den Ort des Knotens innerhalb eines ein Netzwerk logisch darstellenden Baumes angeben und
die Links eine Bestimmung oder Beziehung für den Knoten bezüglich des benachbarten und der weiteren Knoten des Baumes definieren.

10. Vorrichtung nach Anspruch 9, wobei der benachbarte Knoten so konfiguriert ist, dass er Strategien mit weiteren benachbarten Knoten so einrichtet, dass Bandbreitenstücke von Vaterknoten statt der entsprechenden Sohnknoten verwaltet werden.

11. Vorrichtung nach Anspruch 10, wobei die Bandbreitenstücke als Reserven betrachtet werden, die angefordert werden, bevor sie von einem geeigneten Vaterknoten verwendet werden.

12. Vorrichtung nach Anspruch 9, die ferner so konfiguriert ist, dass Hierarchiebeziehungen zwischen Knoten eines Netzwerks verwaltet werden, um Bandbreite auszuleihen.

13. Vorrichtung nach Anspruch 9, wobei der vordefinierte Bandbreitenbetrag von dem benachbarten Knoten unter Verwendung einer Technik der engsten Beziehungszuordnung vorübergehend ausgeliehen werden kann.

14. Vorrichtung nach Anspruch 9, die ferner so konfiguriert ist, dass das Ausleihen von Bandbreite zwischen Knoten des Netzwerks unter Verwendung einer Technik der engsten Beziehungszuordnung erfolgt.

**15.** Computerprogramm, das bei Ablauf auf einem Computer oder Computernetzwerk sämtliche Schritte des Verfahrens nach einem der Ansprüche 1 bis 8 ausführt.

**Revendications**

**1.** Procédé (300) de gestion de bande passante, comprenant le fait :

> de surveiller (310) un volume de trafic au niveau d'un noeud de traitement d'un réseau ;
> ledit procédé étant **caractérisé par** le fait :
>
>> de détecter (320) que le volume est tombé en dessous d'une limite prédéfinie d'une quantité prédéterminée ;
>> de réserver (330) la quantité prédéfinie ; et
>> de communiquer (340) la quantité prédéfinie réservée à un noeud adjacent.

**2.** Procédé de la revendication 1, comprenant en outre le fait :

> de détecter (350) une demande de transaction de réseau qui dépasse une bande passante disponible au niveau d'un noeud de traitement différent ; et
> de demander (360) une quantité de bande passante nécessaire pour servir la transaction de réseau à partir de la quantité prédéfinie réservée détenue par le noeud adjacent.

**3.** Procédé de la revendication 1, comprenant en outre le fait d'ajouter la quantité prédéfinie réservée à une bande passante disponible au niveau du noeud adjacent.

**4.** Procédé de la revendication 3, comprenant en outre le fait de décrémenter, au niveau du noeud adjacent, une quantité de bande passante demandée à partir de la bande passante disponible après la réception d'une demande de bande passante nécessaire à partir d'un noeud de traitement différent.

**5.** Procédé de la revendication 4, comprenant en outre le fait d'emprunter (360), au niveau du noeud adjacent, à partir d'un noeud adjacent qui est adjacent au noeud adjacent, au moins une partie de la quantité de bande passante demandée si la quantité de bande passante demandée dépasse la bande passante disponible.

**6.** Procédé de la revendication 1, comprenant en outre le fait de maintenir, par le noeud de traitement, une liste de noeuds connectés directement au noeud de traitement qui comporte le noeud adjacent.

**7.** Procédé de la revendication 1, comprenant en outre le fait de maintenir (370), par le noeud de traitement, une bande passante totale agrégée disponible au niveau d'un noeud de destination.

**8.** Procédé de la revendication 1, comprenant en outre le fait de surveiller, par le noeud adjacent, un volume de trafic de réseau se produisant avec ses liens vers ses autres noeuds adjacents.

**9.** Appareil (400) pour une utilisation dans un réseau, ledit appareil comprenant :

> un noeud de réseau (402, 403) pour traiter une transaction de réseau,
> **caractérisé en ce que** le noeud de réseau comprend :
>
>> un dispositif de surveillance de trafic ($402_A$, $403_A$) pour surveiller un trafic de réseau et pour communiquer ce trafic de réseau à un noeud adjacent ;
>> un modificateur de bande passante ($402_B$, $403_B$) pour ajuster une allocation de bande passante sur la base d'une communication avec le dispositif de surveillance de trafic ; et
>> un processeur de signalisation ($402_c$, $403_c$) pour allouer une bande passante disponible sur la base d'une communication avec le dispositif de surveillance de trafic ($402_A$, $403_A$) et le modificateur de bande passante ($402_B$, $403_B$) ; le noeud étant configuré pour :
>>
>>> utiliser son dispositif de surveillance de trafic ($402_A$, $403_A$), son modificateur de bande passante ($402_B$, $403_B$), et son processeur de signalisation ($402_c$, $403_c$) pour réserver une quantité prédéfinie de bande passante si elle devient disponible avant toute demande de cette quantité prédéfinie et communiquer cette réservation au noeud adjacent ;
>>> maintenir des liens vers le noeud adjacent et d'autres noeuds, et dans lequel :
>>>
>>>> les liens représentent l'emplacement du noeud dans un arbre qui représente logiquement un réseau ; et
>>>> les liens définissent une désignation ou une relation pour le noeud par rapport au noeud adjacent et aux autres noeuds de l'arbre.

**10.** Appareil de la revendication 9, dans lequel le noeud adjacent est configuré pour établir des politiques avec d'autres noeuds adjacents de sorte que des blocs de bande passante soient gérés par des noeuds pères au nom de leurs noeuds fils.

**11.** Appareil de la revendication 10, dans lequel les blocs de bande passante sont considérés comme des réserves, qui sont demandés avant que les réserves ne soient utilisées à partir d'un noeud père approprié.

**12.** Appareil de la revendication 9, configuré en outre de sorte que des relations hiérarchiques entre des noeuds d'un réseau soient gérées afin d'emprunter une bande passante.

**13.** Appareil de la revendication 9, dans lequel la quantité prédéterminée de bande passante peut être empruntée temporairement à partir du noeud adjacent en utilisant une technique d'allocation de relation la plus proche.

**14.** Appareil de la revendication 9, configuré en outre de sorte qu'un emprunt entre les noeuds du réseau pour une bande passante se produise en utilisant une technique de relation la plus proche.

**15.** Programme informatique qui, lorsqu'il est exécuté sur un ordinateur ou un réseau informatique, effectue toutes les étapes de procédé de l'une quelconque des revendications 1 à 8.

FIG. 1

200

RECEIVE NETWORK
TRANSACTION

210

DOES BANDWIDTH
NEEDED EXCEED
DESTINATION NODE
BANDWIDTH?

220

DELAY OR DENY
REQUEST

222

YES

NO

GUARANTEE
SERVICE

230

BORROW
BANDWIDTH FROM
ADJACENT NODE

270

DETECT AT ONE
NODE LACK OF
BANDWIDTH

260

DECREMENT
DESTINATION NODE
BANDWIDTH BY
BANDWIDTH
NEEDED

240

PROCESS THROUGH
NODES OF NETWORK
TO DESTINATION
NODE

250

FIG. 2

FIG. 3

400

401 — NETWORK TREE

402 — NODE₁ | | NODE_N | 403

* * *

TRAFFIC MONITOR₁

BANDWIDTH MODIFIER₁

SIGNALING PROCESSOR₁

402A

402B

402C

TRAFFIC MONITOR_N

BANDWIDTH MODIFIER_N

SIGNALING PROCESSOR_N

403A

403B

403C

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5982748 A
- US 5347511 A
- US 5359593 A
- US 9722776 W
- WO 9826612 A
- EP 1300995 A2
- US 6477582 B1
- EP 1202501 A2